# EUROPEAN PATENT APPLICATION

(11) **EP 2 696 540 A1**
(43) Date of publication of application: **12.02.2014**
(21) Application number: 13174231.4
(22) Date of filing: 28.06.2013
(51) Int. Cl.: H04L 12/58, H04L 12/18

(54) **Communication alerts management**

(30) Priority: 07.08.2012 US 201213568964
(71) Applicant: Mitel Networks Corporation, Ottawa, ON K2K 2W7 (CA)
(72) Inventor: Midtun, James D, Chandler, AZ Arizona 85249 (US)
(74) Representative: McDougall, James

(57) **Abstract**

A method is described for managing communication alerts on multiple remote devices that are associated with a common user and in contemporaneous communication with a server on a communication network. The method can include designating on the server one of the plurality of remote devices as being in an active state, and sending a communication from the server to the remote devices. Only the remote device designated as in the active state displays an alert announcing the incoming communication.

## Description

### Background

Communications systems that integrate human and device communications often allow users to access the system from a variety of remote devices, such as desktop computers, notebook computers, tablet computers, mobile telephones, and the like. Many such communication systems further allow a single user to access the system from multiple devices at the same time. These systems typically deliver messages and notifications to the devices at which a user is logged in. When a user is logged in at more than one device, the system must determine to which device to send messages and notifications so as to reach the user. Typical approaches to this problem include forcing the user to log out at one device in order to log in on another device, or allowing multiple logins and sending messages and notifications to all of the user's logged in devices.

Forcing a user to log on only one device denies the user the advantages of multiple devices, e.g. being able to step away from a desktop computer and still receive notifications on a mobile phone without having to log in on the phone first. Conversely, messaging to multiple devices burdens the user with handling multiple redundant alerts. For example, a user can be logged into a unified communications system on both a personal computer and on a mobile phone. While using the personal computer to "chat" on the system, the user might receive chat alerts on both devices. Therefore, even if the user has acknowledged the alerts while chatting on the personal computer, the same alerts would sound on the mobile phone as well. The user would then be faced with acknowledging and dismissing the alerts on the mobile phone even though they are no longer timely or relevant.

### Brief Description of the Drawings

FIG. 1 is a flow diagram of a method in accordance with an embodiment;
FIG. 2 is a flow diagram of a method in accordance with another embodiment;
FIG. 3 is a schematic diagram of a system according to an embodiment;
FIG. 4 is a diagram of a specific exemplary system in accordance with the embodiment in FIG. 3; and
FIG. 5 is a diagram of another specific exemplary in accordance with the embodiment in FIG. 3.

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Various techniques, or certain aspects or portions thereof, may take the form of program code (i.e., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as defacto equivalents of one another, but are to be considered as separate and autonomous representations of the present invention.

The term "device" is used herein to refer to a physical machine on which is embodied code enabling communication with the server. It is understood that in many cases, this code is included in a discrete application (commonly called a "client") that is embodied and executable on the device. To the degree that the client is responsible for accomplishing communication on the system, the client may be treated as a proxy for the device on the system. Therefore, the terms "client" and "device" will be used interchangeably in the discussion below, except where the language clearly indicates that reference to one or the other is intended.

As used herein, the term "remote device" refers to a device that is separate from the server and is configured to communicate with the server and optionally with other devices on the system. The device can be situated at a particular remote location, or can be readily moved to and between multiple remote locations. In a particular example, the remote device can be carried on the person of a user.

As used herein, to "display" an alert refers to the presentation of the alert in a way designed to direct a user's attention to the alert. Displaying can include generating visual cues (e.g. a pop-up message on a display screen) as well as auditory cues and/or vibrational cues.

The present technology provides methods and systems for managing messages and alerts for multiple devices contemporaneously logged onto a communications system as a single user. In one aspect of the present technology, desired messaging is retained across multiple devices while restricting the presentation of alerts to a particular device or client, e.g. the device currently being actively used. Alternatively, desired messaging as well as alerts may be sent to only the device being actively used.

In the present technology, alerts are managed in a network setting where a plurality of remote devices associated with a common user are in contemporaneous communication with a network resource, such as a server. In an example, a user is logged in to the server with multiple remote devices, using the same user profile with each device. Each of the remote devices can be equipped with a client for accomplishing communication on the network. In one aspect, the client can be a web-based utility for accessing the network from an outside device on which no compatible client is installed. The user interacts with the system or otherwise utilizes system resources at any given time with one of the devices. Communications (e.g. emails, instant messages, requests, SMS, and the like) that are directed to the user may be sent to any client signed in as that user.

A function that is commonly provided by device-side clients is to inform the user of the arrival of a communication by displaying an alert. The alert can include any event designed to capture the user's attention, such as displaying a pop-up on a screen of the device, issuing a sound such as a tone, ring, buzz, spoken phrase, or the like, causing the device to vibrate, or any of a number of other approaches known in the art. When the user is actively using one device, alerts on the other logged-in devices are redundant and potentially distracting. According to methods of the present technology, one of the remote devices can be designated as being in an active state. In a particular example, the active state is associated with the device being directly manipulated by the user. Displaying alerts is associated exclusively with the active state designation, such that only the device in the active state announces communications sent to the user by displaying alerts.

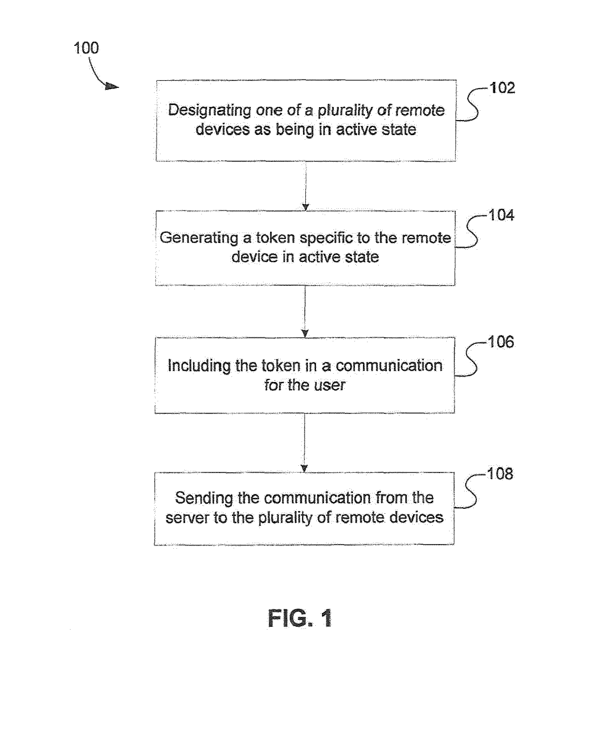

In an embodiment of the present technology, the system uses a token-based approach to manage alerting behavior during communication with multiple devices. In an example, a method for managing communication alerts includes designating one of a plurality of devices associated with a common user as being in an active state. Upon sending a communication from the server to the devices, only the device designated as in active state displays an alert. In a particular embodiment, a device-specific token is used to indicate which remote device is in an active state. Referring to FIG. 1, an embodiment of the method 100 includes designating 102 one of a plurality of devices associated with a common user as being in an active state. The method further provides the steps of generating 104 a token that is specific to the active device, and including 106 this token with communications going out to the user and sending 108 those communications to one or more of the remote devices. In this approach, when a communication bearing the token is sent to multiple devices, each device (or more particularly, the client thereon) either recognizes the token as its own or fails to do so. In each case, the client on each device then responds to the communication accordingly. More specifically, the active device, upon recognizing the token as being specific to that device, alerts the user to the communication. The other devices, however, either do not recognize the token or associate the token with another device and therefore may receive the communication without displaying an alert.

In another aspect, the device in an active state can convey information to the server indicating that device's location. This can be done upon designation of active state for that device, or upon receipt of a communication while in the active state, or at intervals during the active state. Location can be ascertained by any of the location methods known in the art, including but not limited to GPS, cell ID, Wi-Fi positioning, triangulation, on-device inertial sensors, and Bluetooth™ beaconing. At the network level, location of the active device can be used as a proxy for the location of the user. In particular, where the user accesses the system from a number of remote devices at different locations, the user's current location can be ascertained by which of the devices is or was most recently in an active state. This information can be used to contact the user quickly when the user's movements or itinerary are otherwise not known. For example, if a user is away from her office but her mobile phone has been the most recently active device, an attempt can be made to reach the user by calling her on the mobile phone. In another example, when a remote user has a personal computer that is known to be located at his home, attempts to reach that user may include calling his home phone number if the personal computer is currently designated as active.

The device specificity of the token can be based on a unique identifier incorporated into the token. In one example, the identifier can include a designation specific to particular hardware in the device. Examples of such identifiers include, but are not limited to, MAC addresses and serial numbers. However, any hardware-based identifier that is suitable for inclusion in a network token can be used. In another example, the token can be generated from software using an algorithm that creates a unique value that can be assigned to the device.

A number of approaches can be taken in creating the token in accordance with the present technology. The token can be generated on the server side (e.g. by a token module residing on the server). Alternatively, the token can be generated on the device side (e.g. by the client residing on the device) and then supplied to the server. The token can be generated upon designation of the active device and done for that device only, or conversely, tokens can be generated for a plurality of devices at a certain time (e.g. upon establishing the user's profile), where the appropriate token is selected when the corresponding device is designated as being active.

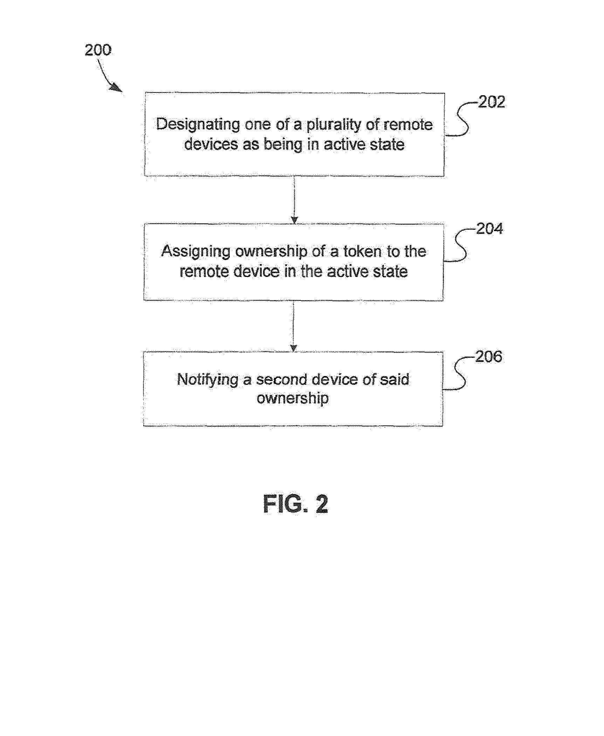

In another embodiment, a token ownership policy is employed to manage alerting behavior. In an example as shown in FIG. 2, a method 200 can include designating 202 at the server one of a plurality of remote devices as being in an active state, then assigning 204 ownership of a token to that remote device. The current state of ownership can then be communicated to other elements of the system. For example, upon assignment of ownership to a device, a communication can be sent to the device informing the client thereon of the assignment. Referring back to the method 200 in FIG. 2, the method also includes notifying 206 at least a second remote device that the active device owns the token. For example, one or more, or all, of the other remote devices associated with the user can be notified that the active device owns the token.

Steps leading to the assignment of ownership of the token can originate from the server side or from the device side. In one example, a remote device from a plurality of devices associated with a common user can be designated as the active device and assigned ownership based on a policy or algorithm embodied on a server. In another example, ownership can be assigned to a remote device in response to a request from that remote device. One aspect of this approach is to link designation of active state and token ownership with actual activity on the device so designated. Therefore, in a specific aspect, the user can accomplish the request by executing a command specifically directed to that end on the device client.

In an alternative aspect, other activity on the device can have the effect of requesting ownership. This activity can include actions or occurrences that tend to coincide with active use of the device. In a specific example, any input to the device by the user can constitute a request. In another example, powering up the device can accomplish the request. In still another example, initiating a session on the server by logging on using a remote device also constitutes a request for ownership by that device. Many devices such as tablet computers, mobile phones, personal digital assistants and the like include components that sense movement or position of the device. In one example, movement of the device can be treated as a request for token ownership. It should be noted that these examples are merely exemplary, not exhaustive, of the types of device-side activity that can be treated as a request for token ownership in accordance with the present technology. Rather, any activity or occurrence at a remote device that can be detected by the communications system and is consonant with actual use of the device can be treated as such a request.

In view of the types of requests for ownership described above, it is contemplated that in some situations the server may receive two or more such requests from different devices, thereby creating a potential conflict. For example, a user may walk about while using a tablet computer, such that the motion registers on a mobile phone in her pocket. The present method can include a conflict resolution policy, i.e. in which priorities are set to determine which of a plurality of requesting devices should be assigned ownership of the token.

In a particular embodiment, once ownership of the token has been assigned to the active device, the server can manage communications based on awareness of the assignment. More specifically, some or all communications can be directed exclusively to the active device. In this way, the user only receives alerts on the device that owns the token (i.e. the active device). In another aspect, the method can be used to reduce bandwidth between the server and the clients. For example, a communications system can include messaging that is transient or temporary, such as information about user presence or other network information. Often this information flows both from the server out to one or more devices and also from the devices to the server. In an example of the present technology, these types of messages are restricted to the device that owns the token at the time the messages are generated. If ownership changes, then the new owner can receive only the latest (and therefore most relevant) messages.

Once device-side clients have been informed of the state of ownership of the token, each client can use this information to guide the alerting policy for the device. In a particular example, when a message is sent to other remote devices in addition to the active device, only the active device (i.e. the token owner) displays an alert announcing the message. The other devices, however, recognize that they do not own the token and therefore may receive the communication without displaying an alert.

Once assigned to a particular device, ownership of the token can last for a period of time and then eventually terminate. Ownership can terminate under a number of circumstances in accordance with aspects of the present technology. In a particular aspect, ownership of the token can be set to terminate at some predetermined time, i.e. after a set duration of time has elapsed since assignment, or at a specific chronological time. In another aspect, token ownership by one device ends upon the request for ownership by another device. As noted above, this transfer of ownership can be made subject to a policy that determines device priority.

According to the embodiment, ownership of the token is associated with a particular remote device being designated as active. Therefore, in one embodiment a "single ownership" policy can be used, in which ownership of the token can be restricted to a single device at any given time. That is, the device designated as active holds ownership of the token and ownership does not pass to another device until ownership by the previous device ceases. As discussed above, this cessation can occur at a set time or upon a new request for ownership. In another embodiment, shared ownership can be allowed. In a particular example, where one device owns the token, and a second device requests ownership, ownership by the first device is not terminated immediately upon assignment to the second device, but rather is allowed to continue for a duration of time. This overlap in ownership can last for a predetermined amount of time according to system policy, or alternatively can be determined by the user.

The approach described herein can be implemented as a set of computer-executable program code, which can be provided on a tangible computer usable storage medium. In an embodiment, the program code can be executed to perform operations in accordance with the above method, including: establishing communication contemporaneously with a plurality of remote devices associated with a common user; designating one of the plurality of remote devices as being in an active state; sending a communication to at least the active state device, and optionally others in the plurality of remote devices; and managing a token so as to cause only the device in the active state to display an alert announcing receipt of the communication. In a particular embodiment, the managing operation comprises assigning ownership of the token to the device in the active state. In an aspect of this managing can comprise notifying other devices of the assignment. In another particular embodiment, the managing operation comprises making the token specific to the remote device in the active state. In an aspect of this, the sending operation can comprise including the token with the communication.

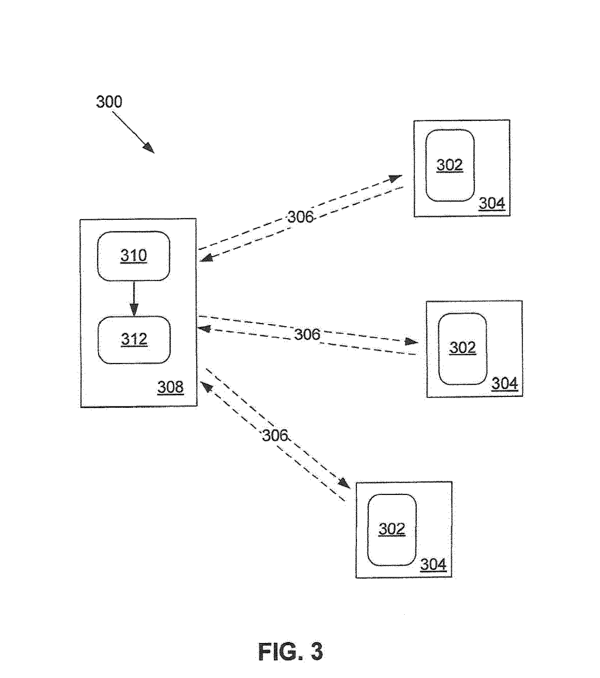

The present technology provides a system for managing communications alerts on a communications network in which a plurality of remote devices associated with a common user are in communication with a server. In an embodiment as shown in FIG. 3, the system 300 can comprise a client 302 embodied on each of the remote devices 304 in communication 306 with a server 308, and a token module 310 and a messaging module 312 embodied on the server. In accordance with the technology, only the remote device designated as in an active state by the token module displays an alert to announce receipt of communications sent by the messaging module.

In the present system, a client embodied on each device is operable for accomplishing communication on the network. In one aspect, the client can be an application installed on the remote device to provide particular functions and access to resources on the network. In another aspect, the client can be a web-based utility for accessing the network from an outside device on which no compatible client is installed. For example, when a user accesses a web-based client on a personal computer, the computer can become a remote device associated with the user on the system. In accordance with the present technology, the client contributes to alert management in that the client only causes the device on which it resides to displays alerts for incoming communications when that device is the active device.

In another aspect, the client can be operable to convey information to the server indicating that device's location when the device is the active device. This can be done upon designation of active state for that device, or upon receipt of a communication while in the active state, or at intervals during the active state. The client can be equipped to ascertain the device's location using any of the location methods known in the art, including but not limited to GPS, cell ID, Wi-Fi positioning, triangulation, on-device inertial sensors, and Bluetooth™ beaconing. The system can use location of the active device to indicate the location of the user.

The modules of the present system are operable to perform functions in accordance with token-based approaches to managing alerts such as described above. The modules can comprise discrete hardware components, machine-executable instructions tangibly embodied on machine-readable media, or any combination thereof. In a particular aspect, the token module and/or the messaging module are situated on the server side of the system. In a more particular aspect, one or both modules are embodied on the server.

The modules provide general functions in accordance with the present system. The token module is operable for designating one of the plurality of remote devices as being in an active state. In a particular aspect of the system, designation of a remote device as being in the active state is associated with the device being directly manipulated by the user. Accordingly, the token module can designate the remote device as active in response to actions or occurrences that are indicative of active use of the device. These can include movement of the device, or user input on the device, or powering up the device, and logging on to the system using the device.

The messaging module is operable for sending communications to the remote devices, and receiving the same. This operability includes any communications appropriate for unified communications functionality, such as emails, instant messages, requests, SMS, and the like. The modules can include further functionality associated with more specific embodiments discussed below.

In a particular embodiment, the system is configured to manage alerting performance at least in part by including device-specific tokens in communications sent from the server to the remote devices. In accordance with this embodiment, the token module can be further operable to generate a token that is specific to the active device. In a particular aspect, the token module can impart device specificity to the token by incorporating a unique identifier into the token. In one example, the identifier can include a designation specific to particular hardware in the device. Examples of such identifiers include, but are not limited to, MAC addresses and serial numbers. The token module can acquire hardware specific information for a device through communication with the device, or from reference to a database of device information. In another example, the token module includes an algorithm that is operable to create a unique value that can be assigned to the device without reference to particular hardware.

In this embodiment, the messaging module further includes the token with communications sent to the remote devices. The client on each device is operable to recognize the token (i.e. whether the token specifies that particular device). The client on the device in the active state will recognize the token as being specific to that device and therefore cause the device to display an alert announcing receipt of the communication.

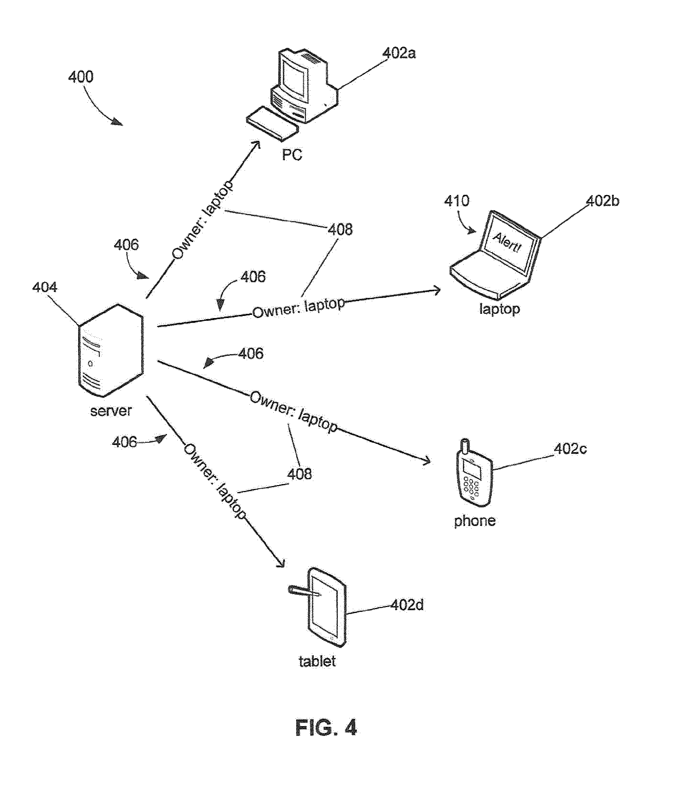

This configuration and its performance are further illustrated in FIG. 4. In the example network 400 shown, a plurality of different remote devices 402a-402d are in communication with a server 404. Communications 406 sent to the remote devices include a token 408 specific to one 402a of the devices (i.e. the laptop). As a result only the laptop displays an alert 410 announcing the communication.

In a particular embodiment, the system is configured to manage alerting behavior using a token ownership policy. In accordance with this embodiment, the token module is further operable to assign ownership of the token to the device designated as being in an active state. In one aspect, the token module can include a policy for selecting which device to designate as active and/or as the token owner. In another aspect, the token module is operable to recognize a request for ownership originating from one of the plurality of remote devices. In one example, the client on a remote device is configured for issuing a request upon a command from the user. In another example, the token module can recognize other activity on the device as a request for ownership. Such activity can include can include movement of the device, or user input on the device, or powering up the device, and logging on to the system using the device.

In a more particular aspect, the token module is also operable to communicate the current state of ownership to other elements of the system. For example, upon assigning token ownership to the active device, a communication can be sent to that device informing the client thereon of the assignment. In a more particular embodiment, the token module notifies at least a second remote device that the active device owns the token.

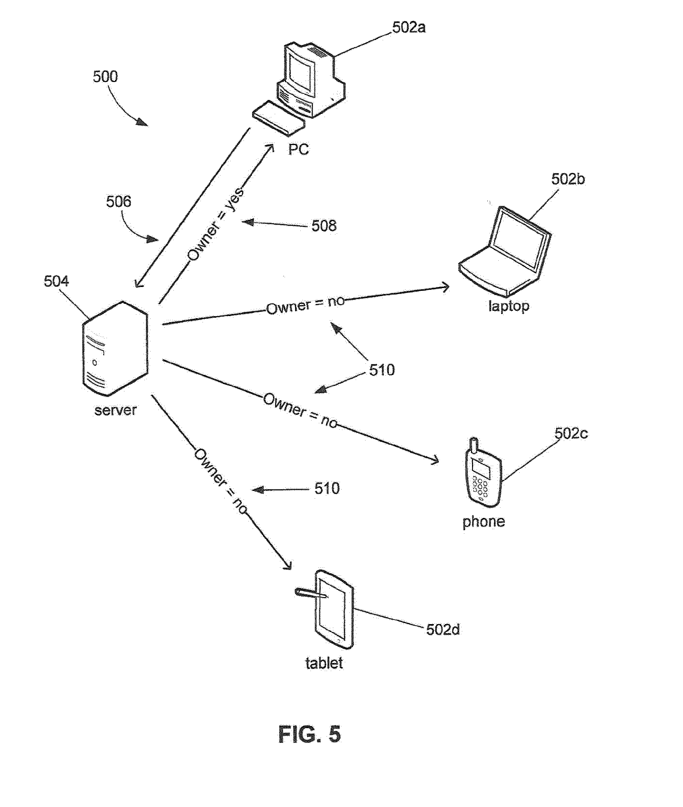

This configuration and its performance are further illustrated in FIG. 5. In the example network 500 shown, a plurality of different remote devices 502a-502d are in communication with a server 504. In response to a request 506 for ownership from one 502a of the devices (the PC), an assignment 508 of ownership is sent to the PC while a notification 510 reflecting this assignment is sent to the other devices 502b-502d.

In accordance with the embodiment, once ownership is assigned, the messaging module manages communications based on awareness of the assignment. In an example, the messaging module directs some or all communications exclusively to the active device. In some embodiments of the present invention, if a communication sent exclusively to an active device goes unacknowledged by a user prior to termination of the active state of the device, then the message and/or alert may be recalled from the device and redirected to a different remote device upon its entrance into a state of activation.

Once informed of the state of ownership of the token, each client is configured to guide the alerting policy for its device based on this information. Specifically, when a message is sent to remote devices in addition to the active device, the client on the token owner displays an alert announcing the message. A client on a device other than the token owner, however, does not display an alert if it receives a communication.

Ownership can terminate under a number of circumstances in accordance with aspects of the present technology. In a particular aspect, token ownership can be set to terminate at some predetermined time, i.e. after a set duration of time has elapsed since assignment, or at a specific chronological time. In another aspect, token ownership by one device ends upon the request for ownership by another device. In one embodiment the system can be configured for single ownership, such that ownership of the token is restricted to a single device at any given time. In an alternative embodiment, the system is configured to allow shared ownership. In a particular aspect, ownership between two devices can overlap for a duration of time.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below

## Claims

1. A method for managing communication alerts on a plurality of remote devices associated with a common user and in contemporaneous communication with a server on a communication network, comprising:
designating on the server one of the plurality of remote devices as being in an active state; and
sending a communication from the server to at least the device designated in the active state, and optionally other of the plurality of remote devices,
wherein only the remote device designated as in the active state displays an alert announcing the incoming communication upon receipt of the communication.

2. The method of claim 1, further comprising:
generating a token specific to the remote device in the active state; and
including the token with the communication sent from the server to the plurality of remote devices.

3. The method of claim 1 or claim 2, further comprising communicating to the server a location of the remote device in the active state to indicate a location of the user.

4. The method of any preceding claim, further comprising:
assigning ownership of a token to the remote device in the active state; and
notifying a second remote device of said ownership.

5. The method of claim 4, wherein ownership of the token expires at a predetermined time.

6. The method of claim 4, wherein ownership of the token expires in response to a request for ownership from a second remote device from among the plurality of remote devices and optionally wherein ownership of the token is shared between the remote devices for a duration of time.

7. The method of any preceding claim, wherein the server sends communications only to the remote device in the active state.

8. A system for managing communication alerts from a server on a communications network to a plurality of remote devices associated with a common user and in communication with the server, comprising:
a client embodied on each of the plurality of remote devices;
a token module operable for designating one of the plurality of remote devices as being in an active state; and
a messaging module operable for sending a communication from the server to at least one of the plurality of remote devices;
wherein only the remote device in the active state displays an alert announcing to the user receipt of the communication.

9. The system of claim 8, wherein:
the token module is further operable to generate a token specific to the remote device in the active state;
the messaging module is further operable to include the token with the communication sent to the plurality of remote devices; and
the client is operable to recognize the token so that receipt of the token by the remote device in the active state causes said remote device to display the alert.

10. The system of claim 8 or claim 9, wherein the token module is operable to designate the remote device in the active state in response to one of movement of said remote device, user input to said remote device, powering up of said remote device, and logging on to the server using said remote device.

11. The system of any of claims 8 to 10, wherein the client is operable to communicate a location of the remote device in the active state to indicate to the server a location of the user.

12. The system of any of claims 8 to 11, wherein:
the token module is operable to assign ownership of a token to the remote device in the active state and to notify a second remote device of said ownership; and wherein each client is operable to recognize ownership of the token by the remote device in the active state, such that the client on the second remote device refrains from displaying an alert upon receipt of the communication at the second remote device and optionally wherein the token module is operable to recognize a request for ownership of the token from one of the plurality of remote devices.

13. The system of claim 12, wherein ownership of the token is configured to expire at a predetermined time or alternatively wherein ownership of the token is configured to expire in response to a request for ownership from a second remote device from among the plurality of remote devices and optionally wherein the remote device in the active state shares ownership of the token with the second remote device for a duration of time after the request.

14. The system of any of claims 8 to 13, wherein the messaging module is configured to send communications only to the remote device in an active state.

15. An article of manufacture including a tangible computer usable storage medium having embodied therein a computer readable program code capable of performing the operations of:
establishing communication contemporaneously with a plurality of remote devices associated with a common user;
designating one of the plurality of remote devices as being in an active state;
sending a communication to either one of or all of the plurality of remote devices; and
managing a token so as to cause only the device in the active state to display an alert announcing receipt of the communication and optionally wherein the managing comprises assigning ownership of the token to the remote device in the active state.
